(19) Europäisches Patentamt
European Patent Office
Office européen des brevets

(11) EP 4 468 442 A1

(12) **EUROPEAN PATENT APPLICATION**
published in accordance with Art. 153(4) EPC

(43) Date of publication:
**27.11.2024 Bulletin 2024/48**

(21) Application number: **23889194.9**

(22) Date of filing: **10.11.2023**

(51) International Patent Classification (IPC):
$H01M\ 10/0585^{(2010.01)}$    $H01M\ 4/13^{(2010.01)}$
$H01M\ 4/139^{(2010.01)}$    $H01M\ 4/04^{(2006.01)}$
$H01M\ 10/44^{(2006.01)}$    $H01M\ 10/052^{(2010.01)}$
$H01M\ 10/0562^{(2010.01)}$    $H01M\ 10/42^{(2006.01)}$

(52) Cooperative Patent Classification (CPC):
**H01M 4/04; H01M 4/13; H01M 4/139;
H01M 10/052; H01M 10/0562; H01M 10/0585;
H01M 10/42; H01M 10/44;** Y02E 60/10; Y02P 70/50

(86) International application number:
**PCT/KR2023/018037**

(87) International publication number:
**WO 2024/101938 (16.05.2024 Gazette 2024/20)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **10.11.2022 KR 20220149206**

(71) Applicant: **LG Energy Solution, Ltd.
Seoul 07335 (KR)**

(72) Inventors:
• **LEE, Jaegil
Daejeon 34122 (KR)**
• **LEE, Dong Chan
Daejeon 34122 (KR)**

(74) Representative: **Goddar, Heinz J.
Boehmert & Boehmert
Anwaltspartnerschaft mbB
Pettenkoferstrasse 22
80336 München (DE)**

(54) **ALL-SOLID-STATE BATTERY AND METHOD FOR MANUFACTURING SAME**

(57)    The present invention relates to an all-solid-state battery and a method for manufacturing same and, more specifically, to an all-solid-state battery and a method for manufacturing same, in which, when an anode active material layer including an anode active material that is alloyable with lithium or forms a compound with lithium is introduced into an anode of an all-solid-state battery in which the anode, a solid electrolyte layer, and a cathode are sequentially stacked, and then is pre-lithiated, the Coulombic efficiency of the anode is increased, resulting in increased battery capacity.

[FIG. 1]

**Description**

REFERENCE TO RELATED APPLICATIONS

The present application is a National Phase entry pursuant to 35 USC 371 of International Application No. PCT/KR2023/018037 filed November 10, 2023, and claims priority to and the benefit of Korean Patent Application No. 10-2022-0149206, filed Nov. 10, 2022, and Korean Patent Application No. 10-2023-0154969, filed Nov. 10, 2023.

TECHNICAL FIELD

The present invention relates to an all-solid-state battery and a method of fabricating the same.

BACKGROUND ART

In recent years, there has been a growing interest in energy storage technologies. With energy applications ranging from cell phones, camcorders and notebook PCs to electric vehicles, research and development efforts in electrochemical devices are taking shape. The development of secondary batteries that can be charged and discharged is the focus of attention in this regard, and recent research and development efforts have been conducted on new electrode and battery designs to improve the capacity density and specific energy of these batteries.

Among the currently applied secondary batteries, lithium secondary batteries, developed in the early 1990s, have attracted attention for their high operating voltage and much greater energy density than conventional batteries such as Ni-MH, Ni-Cd, and lead-sulfate batteries, which use electrolyte solutions containing aqueous solutions.

Liquid electrolytes, such as flammable organic solvents, have been conventionally used in such lithium secondary batteries. However, in batteries using a liquid electrolyte, there is a possibility of problems such as leakage of electrolyte, ignition, and explosion.

To overcome these issues and ensure intrinsic safety, researchers have been working on solid electrolytes instead of liquid electrolytes. An all-solid-state battery, in which the electrolyte and other components are all solid, is called an all-solid-state secondary battery. All-solid-state batteries are attracting attention as the next generation of lithium secondary batteries due to their safety, high energy density, high power output, and simplified manufacturing process.

These all-solid-state batteries can use the lithium metal itself as the negative electrode, or a negative-electrode collector without a negative-electrode active material, as the negative electrode, to increase energy density and create a high-power battery.

In general, if the first-cycle Coulombic efficiency of the negative electrode is lower than the positive electrode, this can cause a decrease in battery capacity. However, pre-lithiation of the negative electrode can increase the Coulombic efficiency of the negative electrode and thus increase the battery capacity.

Therefore, there is a need for a simple and efficient way to further increase the capacity of batteries through a pre-lithiation process applicable to all-solid-state batteries.

(Patent Document 1) Korean Publication No. 2020-0134126
(Patent Document 2) Korean Publication No. 2020-0129383

SUMMARY OF THE INVENTION

The inventors of the present invention conducted extensive research to address the aforementioned issues, and discovered that introducing a negative-electrode active material layer, which comprises a negative-electrode active material which is capable of forming an alloy or compound with lithium, into the negative electrode of an all-solid-state battery in which a negative electrode, a solid electrolyte layer, and positive electrode are sequentially laminated, and followed by a pre-lithiation process, increases the Coulombic efficiency of the negative electrode and, consequently, the capacity of the battery.

Therefore, the objective of the present invention is to provide an all-solid-state battery with increased capacity through the pre-lithiation process and a method to fabricate such a battery.

To achieve the above objectives, the present invention provides an all-solid-state battery comprising: a positive electrode, a negative electrode, and a solid electrolyte layer, wherein the positive electrode includes a positive electrode collector and a positive-electrode active material layer formed on one surface of the positive electrode collector; the negative electrode includes a negative electrode collector, a metallic layer formed on one surface of the negative electrode collector, and a negative-electrode active material layer formed on one surface of the metallic layer; the solid electrolyte layer is disposed between the positive-electrode active material layer and the negative-electrode active material layer; and the negative-electrode active material layer comprises a negative-electrode active material capable of alloying with lithium or forming a compound with lithium, and lithium.

The present invention also provides an all-solid-state battery, wherein in the negative-electrode active material layer, a concentration of lithium gradually decreases from the surface in contact with the metallic layer to an opposite surface.

The present invention also provides an all-solid-state battery, wherein the lithium included in the negative-electrode active material layer is dispersed in a form of lithium ions or exists in a form combined with the negative-electrode active material.

The present invention also provides an all-solid-state battery, wherein the negative-electrode active material includes one or more selected from a group consisting of amorphous carbon, gold (Au), platinum (Pt), palladium (Pd), silicon (Si), silver (Ag), aluminum (Al), bismuth (Bi), tin (Sn), and zinc (Zn).

The present invention also provides an all-solid-state battery, wherein a thickness of the negative-electrode active material layer is 5 to 200 $\mu$m.

The present invention also provides an all-solid-state battery, wherein a ratio of an initial charge capacity of the positive-electrode active material layer to an initial charge capacity of the negative-electrode active material layer satisfies the following Equation 1:

## Equation 1

$$0 \leq (b/a) < 0.01$$

wherein a is the initial charge capacity of the positive-electrode active material layer determined from a first open circuit voltage to a maximum charge voltage (vs Li/Li+), and b is the charge capacity of the negative-electrode active material layer determined from a second open circuit voltage to 0.01V (vs Li/Li+).

The present invention also provides a method for fabricating an all-solid-state battery comprising: (1) applying and drying a slurry comprising a negative-electrode active material capable of alloying with lithium or forming a compound with lithium on a negative electrode support to form a negative-electrode active material layer; (2) applying and drying a slurry comprising a positive-electrode active material on a positive electrode collector to form a positive-electrode active material layer, thereby fabricating a positive electrode; (3) disposing a solid electrolyte layer between the negative-electrode active material layer and the positive-electrode active material layer to form a laminate; (4) pressurizing the laminate, and then removing the negative electrode support from the laminate; (5) attaching one surface of a lithium thin film to one surface of the negative-electrode active material layer from which the negative electrode support has been removed, thereby pre-lithiating the negative-electrode active material layer; (6) attaching a negative electrode collector to an another surface of the lithium thin film; and (7) pressurizing a battery fabricated in the step (6).

The present invention also provides a method for fabricating an all-solid-state battery, wherein the pressurizing in the step (4) is isostatic pressurizing or uniaxial pressurizing at a pressure of 300 to 800 MPa and a temperature of 20 to 150°C.

The present invention also provides a method for fabricating an all-solid-state battery, wherein the pressurizing in the step (7) includes aging after applying pressure.

The present invention also provides a method for fabricating an all-solid-state battery, wherein the pressurizing is isostatic pressurizing or uniaxial pressurizing at a pressure of 0.05 to 100 MPa.

The present invention also provides a method for fabricating an all-solid-state battery, wherein the aging is conducted at a temperature of 20 to 100°C.

The negative electrode of the all-solid-state battery according to the present invention has a structure in which the negative electrode collector, the metallic lithium layer, and the negative-electrode active material layer are sequentially laminated, wherein the negative-electrode active material layer is pre-lithiated by the adjacent metallic lithium layer during the fabrication process, so that the Coulombic efficiency of the negative electrode is increased, thereby improving the capacity of the battery.

## BRIEF DESCRIPTION OF THE DRAWINGS

FIG. 1 is a schematic diagram illustrating a fabrication process for an all-solid-state battery according to Example 1.

FIG. 2 is a graph depicting the initial charge/discharge profile of an all-solid-state battery fabricated in Example 1 and Comparative Example 1, respectively.

## DETAILED DESCRIPTION

Hereinafter, the present invention will be described in more detail to provide a better understanding of the present invention.

The terms and words used in this specification and the claims are not to be construed in their ordinary or dictionary sense, but are to be interpreted in a sense and concept consistent with the technical idea of the present invention, based on the principle that the inventor may properly define the concept of a term to best describe his invention.

As used in this specification, the term "pre-lithiation" means a state in which lithium is diffused and/or inserted between, or bound to, materials capable of absorption-emission of the lithium.

### All-solid-state battery

The present invention relates to an all-solid-state battery, wherein the all-solid-state battery includes a positive electrode, a negative electrode and a solid electrolyte layer. The positive electrode includes a positive electrode collector and a positive electrode active material layer formed on one side of the positive electrode collector. The negative electrode includes a negative electrode collector, a metallic lithium layer formed on one side of the negative electrode collector, and a negative-electrode active material layer formed on one side of the metallic lithium layer. The solid electrolyte layer is disposed between the positive-electrode active material layer and the negative-electrode active material layer. The negative-electrode active material layer includes a negative-electrode active material alloyable with lithium or forming a compound with lithium, and lithium.

The negative electrode included in the all-solid-state battery according to an aspect of the present invention includes the negative electrode collector, the metallic lithium layer formed on one side of the negative electrode collector, and the negative-electrode active material layer formed on one side of the metallic lithium layer.

In an embodiment of the present invention, the negative-electrode active material layer comprises the negative-electrode active material and lithium. The negative-electrode active material layer may further comprise at least one type selected from a binder and a conductive material.

Since the negative-electrode active material layer also functions as a protective layer for the metallic lithium layer, it may have an appropriate thickness to secure the physicochemical properties required for cell operation. The thickness of the negative-electrode active material layer may be from 0.1 to 500 $\mu$m. Specifically, the thickness of the negative-electrode active material layer may be 0.1 $\mu$m or more, 5 $\mu$m or more, 10 $\mu$m or more, 30 $\mu$m or more, 50 $\mu$m or more, 100 $\mu$m or more, and 200 $\mu$m or less, 300 $\mu$m or less, 400 $\mu$m or less, or 500 $\mu$m or less. If the thickness of the negative-electrode active material layer is less than 0.1 $\mu$m, the mechanical strength of the negative-electrode active material layer may be reduced, and if the thickness is greater than 500 $\mu$m, the lithium ion transfer resistance may be increased.

In the present invention, the negative-electrode active material is not particularly limited as long as it is a negative-electrode active material that is alloyable with lithium or forms a compound with lithium. For example, the negative-electrode active material may comprise one or more species selected from a group consisting of amorphous carbon, gold (Au), platinum (Pt), palladium (Pd), silicon (Si), silver (Ag), aluminum (Al), bismuth (Bi), tin (Sn), and zinc (Zn).

The negative-electrode active material may comprise from 50 to 99.9 wt%, based on the total weight of the negative-electrode active material layer.

Further, the lithium may be introduced in a process of pre-lithiation of the negative-electrode active material layer during fabrication of the all-solid-state battery.

The lithium may be partially contained within the negative-electrode active material layer. In the negative-electrode active material layer, the amount of lithium that can be accommodated without precipitation may be less than the amount of lithium that can be extracted from the positive electrode, resulting in an anodeless state. Generally, the operating mechanism of an anodeless cell is such that the amount of lithium that can be extracted from the positive electrode is much greater than the amount that can enter the negative electrode, leading to lithium precipitation once the negative electrode is fully saturated with lithium. Due to the first cycle irreversible capacity of the negative-electrode active material, increasing the capacity of the negative electrode can decrease the first cycle efficiency of the cell, consequently reducing the discharge capacity (reversible capacity). Therefore, it may be preferable to reduce the first cycle charge capacity of the negative-electrode active material, excluding lithium precipitation, by including lithium within the negative-electrode active material layer. Since the negative-electrode active material layer also serves as a protective layer for the metallic lithium layer, it is required to have a certain thickness. To ensure that the negative-electrode active material layer of a certain thickness includes lithium, a pre-lithiation process may be performed to form the negative-electrode active material layer.

The lithium may comprise from 0.1 wt% to 50 wt%, based on the total weight of the negative-electrode active material layer. Specifically, the content of the lithium may be 0.1 wt% or more, 3 wt% or more, 5 wt% or more, or 10 wt% or more, and may be 30 wt% or less, 40 wt% or less, or 50 wt% or less. If the content of the lithium is less than 0.1 wt%, the increase in the first cycle efficiency of the cell may be insignificant, and if it is greater than 50 wt%, the improvement effect may be reduced because the first cycle Coulombic efficiency of the negative-electrode active material layer becomes greater than the first cycle Coulombic efficiency of the positive-electrode active material layer, thereby increasing the weight and volume of the battery without the effect of increasing the reversible capacity of the cell. In this case, the content of lithium contained in the negative-electrode active material layer includes lithium inserted into the negative-electrode active material layer through the pre-lithiation process.

The pre-lithiation process may be performed by attaching a lithium thin film to one side of the negative-electrode active material layer. Accordingly, the lithium introduced into the negative-electrode active material layer by the pre-lithiation process may be present in different concentration gradients depending on the location within the negative-electrode active material layer.

In the negative-electrode active material layer, the concentration of the lithium may have a gradually decreasing concentration gradient from one side abutting the metallic lithium layer to the other side. In this case, having a gradually decreasing concentration gradient of the lithium metal may mean both a continuous decrease and a discontinuous decrease in the concentration of the lithium metal.

The concentrations and compositions can be determined using methods such as Electron Probe Micro Analyzer (EPMA), Inductively Coupled Plasma - Atomic Emission Spectrometer (ICP-AES), Time of Flight Secondary Ion Mass Spectrometry (ToF-SIMS), or X-ray Photoelectron Spectroscopy (XPS). Specifically, EPMA can be used to measure the atomic ratio of each metal as it moves from the center to the surface of the negative electrode collector, or XPS can be used to measure the atomic ratio of each metal as it etches from the surface to the center of the negative electrode collector.

In the present invention, a binder, which may be included in the negative-electrode active material layer, can improve the bonding of the negative-electrode active material to the conductive material and the bonding to the negative electrode collector. Examples of these binders include polyvinylidene fluoride (PVDF), polyvinyl alcohol (PVA), carboxymethyl cellulose (CMC), starch, hydroxypropyl cellulose, regenerated cellulose, polyvinylpyrrolidone, tetrafluoroethylene, polyethylene, polypropylene, ethylene-propylene-diene polymer (EPDM), sulfonated-EPDM, styrene-butadiene rubber, fluorinated rubber, and various copolymers thereof.

Furthermore, the binder may comprise from 1 wt% to 30 wt% based on the total weight of the negative-electrode active material layer, and more specifically, the content of the binder may be 1 wt% or more, 3 wt% or more, or 5 wt% or more, and may be 15 wt% or less, 20 wt% or less, 25 wt% or less, or 30 wt% or less. A content of less than 1 wt% of the binder may result in poor adhesion of the negative-electrode active material to the metallic lithium layer, and a content of more than 30 wt% may result in improved adhesion but increased lithium ion resistance, resulting in poor cell performance.

In the present invention, a conductive material, which may be included in the negative-electrode active material layer, may be used to further improve the conductivity of the negative-electrode active material. Such conductive material may be, but is not limited to, conductive without causing chemical changes in the battery, for example, graphite, such as natural graphite or artificial graphite; carbon black, such as carbon black, acetylene black, ketjen black, channel black, furnace black, lamp black, thermal black, etc; conductive fibers, such as carbon fibers or metal fibers; metal powders, such as carbon fluoride, aluminum, nickel powder; conductive whiskers, such as zinc oxide, potassium titanate; conductive metal oxides, such as titanium oxide; polyphenylene derivatives; and the like,

The conductive material may be included from 0.5 to 30 wt%, based on the total weight of the negative-electrode active material layer. Specifically, the content of the conductive material may be 0.5 wt% or more, 1 wt% or more, 3 wt% or more, and 10 wt% or less, 15 wt% or less, 20 wt% or less, 25 wt% or less, or 30 wt% or less. If the content of the conductive material is too small, such as less than 0.5 wt%, the effect of improving the electrical conductivity may not be expected or the electrochemical properties of the battery may be degraded, and if the content is too large, such as more than 30 wt%, the amount of the negative-electrode active material may be relatively small, resulting in a decrease in the capacity and energy density.

In an embodiment of the present invention, the metallic lithium layer is introduced in a process for pre-lithiating the negative-electrode active material layer, and the metallic lithium layer may comprise lithium and/or a lithium alloy. The lithium and/or lithium alloy may be used as the negative-electrode active material.

The thickness of the metallic lithium layer may be more than 0 $\mu$m, 1 $\mu$m or more, 3 $\mu$m or more, or 5 $\mu$m or more, and may be 10 $\mu$m or less, 15 $\mu$m or less, 20 $\mu$m or less, 25 $\mu$m or less, or 30 $\mu$m or less. When the thickness of the metallic lithium layer is 0 $\mu$m, the capacity of the lithium becomes smaller than the charge capacity of the negative-electrode active material, which means that all of the lithium in the metallic lithium layer is used for pre-lithiation and the metallic lithium layer is present. If the thickness of the metallic lithium layer is included in the above range while the capacity of the lithium is greater than the charging capacity of the negative-electrode active material, a residual metallic lithium layer may exist. The thicker the thickness of the metallic lithium layer, the longer the battery life can be increased by compensating for the lithium consumed in the side reaction occurring at the negative electrode, but if the thickness is excessively thick, such as 30 $\mu$m or more, the reduction in the energy density of the battery is large compared to the effect of increasing the life and is not efficient.

In an embodiment of the present invention, the negative electrode collector may be made of a material that is conductive and does not react with lithium, without causing chemical changes in the battery.

The negative electrode collector may comprise at least one species selected from a group consisting of Copper (Cu), Stainless Steel (SS), Titanium (Ti), Iron (Fe), Cobalt (Co), and Nickel (Ni).

In addition, the negative electrode collector may also take various forms, such as a film, sheet, foil, net, porous material, foam, non-woven material, etc. having microscopic unevenness formed on its surface.

A positive electrode included in an all-solid-state battery according to an aspect of the present invention includes a positive electrode collector and a positive-electrode active material layer formed on one side of the positive electrode collector.

In an embodiment of the present invention, the positive-electrode active material layer may comprise a positive-electrode active material, a binder, and a conductive material.

In the present invention, the positive-electrode active material may be, without limitation, any material capable of reversibly adsorbing and releasing lithium ions, for example, a layered compound substituted with 1 or more transition metals such as lithium cobalt oxide ($LiCoO_2$), lithium nickel oxide ($LiNiO_2$), $Li[Ni_xCo_yMn_zM_v]O_2$ (in the formula, M is any one or more elements selected from a group consisting of Al, Ga, and In; $0.3 \leq x < 1.0$, $0 \leq y$, $z \leq 0.5$, $0 \leq v \leq 0.1$, $x+y+z+v=1$), $Li(Li_aM_{b-a-b'}M'_{b'})O_{2-c}A_c$ (in the formula, $0 \leq a \leq 0.2$, $0.6 \leq b \leq 1$, $0 \leq b' \leq 0.2$, $0 \leq c \leq 0.2$; M includes Mn and at least one species selected from a group consisting of Ni, Co, Fe, Cr, V, Cu, Zn, and Ti; M' is at least one species selected from a group consisting of Al, Mg, and B; and A is at least one species selected from a group consisting of P, F, S, and N); lithium manganese oxides such as a compound of the formula $Li_{1+y}Mn_{2-y}O_4$ (wherein y is 0 to 0.33), $LiMnO_3$, $LiMn_2 O_2$, $LiMnO_2$; lithium copper oxides ($Li_2CuO_2$); vanadium oxides, such as $LiV_3O_8$, $LiFe_3O_4$, $V_2O_5$, $Cu_2V_2O_7$; Ni-site type nickel oxides represented by the formula $LiNi_{1-y}MyO_2$ (wherein M=Co, Mn, Al, Cu, Fe, Mg, B, or Ga, and y is 0.01 to 0.3); lithium manganese complex oxides represented by the formula $LiMn_{2-y}M_yO_2$ (wherein M is Co, Ni, Fe, Cr, Zn, or Ta, and y is 0.01 to 0.1) or by the formula $Li_2Mn_3MO_8$ (wherein M is Fe, Co, Ni, Cu, or Zn); $LiMnO_{24}$ wherein the Li portion of the formula is substituted by an alkaline earth metal ion; disulfide compounds; $Fe_2(MoO_4)_3$; and the like, but not limited thereto.

The positive-electrode active material may comprise from 50 to 90% by weight, based on the total weight of the positive-electrode active material layer.

In an embodiment of the present invention, the type and content of the binder and conductive material included in the positive-electrode active material layer may be the same as the binder and conductive material used in the negative-electrode active material layer.

In an embodiment of the present invention, the positive electrode collector may be conductive, without causing chemical changes in the battery.

The positive electrode collector may be made of stainless steel, aluminum, nickel, titanium, calcined carbon, or aluminum or stainless steel surface treated with carbon, nickel, titanium, silver, or the like. In addition, the positive electrode collector may typically have a thickness of 3 to 500 $\mu$m, and fine unevenness may be formed on the surface of the collector to increase the adhesion of the positive-electrode active material. It can be used in various forms, for example, as a film, sheet, foil, net, porous material, foam, non-woven material, etc.

In an all-solid-state battery according to an aspect of the present invention, the solid electrolyte layer may comprise a sulfide-based solid electrolyte.

The sulfide-based solid electrolyte may be one that contains sulfur (S) and has the ionic conductivity of a metal belonging to the first or second group of the periodic table. Specifically, the sulfide-based solid electrolyte may be any one selected from a group consisting of $Li_6PS_5Cl$. $Li_2S-P_2S_5$, $Li_2S-LiI-P_2S_5$, $Li_2S-P_2S_5-LiCl$, $Li_2S-LiI-Li_2O-P_2S_5$, $Li_2S-LiBr-P_2S_5$, $Li_2S-Li_2O-P_2S_5$, $Li_2S-Li_3PO_4-P_2S_5$, $Li_2S-P_2S_5-P_2O_5$, $Li_2S-P_2S_5-SiS_2$, $Li_2S-P_2S_5-SnS$, $Li_2S-P_2S_5-Al_2S_3$, $Li_2S-GeS_2$ and $Li_2S-GeS_2-ZnS$.

Furthermore, the average particle diameter ($D_{50}$) of the sulfide-based solid electrolyte may be from 100 nm to 700 nm, and more particularly may be from 100 nm or more, 200 nm or more, or 300 nm or more, and may be from 1000 nm or less, 900 nm or less, 800 nm or less, or 700 nm or less. When the average particle diameter ($D_{50}$) of the sulfide-based solid electrolyte belongs within the above range, lithium dendrite that may be formed at the negative electrode may be prevented from reaching the interface on the positive electrode side, thereby preventing a short circuit from occurring. The average particle diameter ($D_{50}$) may be defined as the particle size corresponding to 50% of the volume accumulation in the particle size distribution curve of the particles. The average particle diameter ($D_{50}$) can be measured, for example, using a laser diffraction method. The laser diffraction method is generally capable of measuring particle diameters from the submicron region down to a few millimeters and can yield highly reproducible and highly resolvable results.

The solid electrolyte layer may also comprise a lithium salt.

The above lithium salts may include one or more species selected from a group consisting of $(CF_3SO2)_2Nli$ (Lithium bis (trifluoromethanesulphonyl) imide, LiTFSI), $(FSO_2)_2Nli$ (Lithium bis(fluorosulfonyl) imide, LiFSI), $LiNOs$, LiOH, LiCl, LiBr, Lil, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $CF_3SO_3Li$ and LiSCN, $LiC(CF_3SO_2)_3$.

Further, the lithium salt may be included from 10 wt% to 30 wt% based on the total weight of the solid electrolyte, and more specifically, the content of the lithium salt may be 10 wt% or more, 13 wt% or more, 15 wt% or more, or 20 wt% or less, 25 wt% or less, or 30 wt% or less. If the content of the lithium salt is less than 10 wt%, the ionic conductivity may be reduced, and if it is greater than 30 wt%, a solid electrolyte may not be formed.

In an all-solid-state battery according to an aspect of the present invention, a ratio of an initial charge capacity of the positive-electrode active material layer to an initial charge capacity of the negative-electrode active material layer may be such that the ratio satisfies Equation 1 below.

## Equation 1

$$0 \le (b/a) < 0.01$$

In Equation 1 above, a is the initial charge capacity of the positive-electrode active material layer determined from the first open circuit voltage to the maximum charge voltage (vs Li/Li+), and b is the charge capacity of the negative-electrode active material layer determined from the second open circuit voltage to 0.01 V (vs Li/Li+).

The charge capacities a and b are determined by using an all-solid-state half-cell having a lithium counter electrode, and may be determined by using a maximum charge voltage (Vs. Li/Li$^+$) from a first open circuit voltage for the positive electrode and 0.01 V (Vs. Li/Li$^+$) from a second open circuit voltage for the negative electrode, respectively.

The maximum charge voltage of the positive electrode may be determined by the positive-electrode active material. In an embodiment, the maximum charge voltage of the positive-electrode active material is determined as the maximum voltage in a cell comprising a positive-electrode active material that satisfies the safety conditions described in Appendix A of "Safety Requirements For Portable Sealed Secondary Cells, And For Batteries Made From Them, For Use In Portable Applications", Japanese Standards Committee, JISC8712:2015. The entire content of JISC8712:2015 is incorporated by reference into this specification. According to an embodiment, the maximum charge voltage may be about 3 volts (V) to about 5 V, about 3.5 V to about 4.5 V, or about 4 V to about 4.4 V, or about 4.1 V to about 4.3 V, or about 4.2 V, or about 4.25 V. In an embodiment, for example, when the positive-electrode active material is lithium cobalt oxide (LCO), nickel cobalt aluminum (NCA), or nickel cobalt manganese (NCM), the maximum charge voltage is 4.1 V or 4.2 V (Vs. Li/Li$^+$). In an embodiment, for example, when the positive-electrode active material is lithium cobalt oxide (LCO), NCA, or NCM, the maximum charge voltage is 4.25 V (Vs. Li/Li$^+$).

**Method for Fabricating an All-solid-state battery**

The present invention also relates to a method for fabricating an all-solid-state battery, which includes steps (1) to (7) below:

(1) applying and drying a slurry comprising a negative-electrode active material that is alloyable with lithium or forms a compound with lithium onto a negative electrode support to form a layer of negative-electrode active material;
(2) fabricating a positive electrode by applying a slurry comprising a positive-electrode active material to a positive electrode collector, drying it, and forming a layer of the positive-electrode active material;
(3) disposing a solid electrolyte layer between the negative-electrode active material layer and the positive-electrode active material layer to form a laminate;
(4) after pressurizing the laminate, removing the negative electrode support from the laminate;
(5) pre-lithiating the negative-electrode active material layer by attaching a surface of a lithium thin film to a surface of the negative-electrode active material layer from which the negative-electrode support has been removed;
(6) attaching a negative electrode collector to the other side of the lithium thin film; and
(7) pressurizing the battery fabricated in step (6) above.

The types and contents of materials used in the above fabricate method are the same as previously described.

Hereinafter, the method for fabricating an all-solid-state battery according to the present invention will be described in more detail for each step.
In the present invention, in step (1) above, a slurry comprising a negative-electrode active material alloyable with lithium or forming a compound with lithium is applied to a negative-electrode support and dried to form a layer of negative-electrode active material to fabricate a negative electrode.
Specifically, the slurry may be fabricated by mixing a negative-electrode active material, a solid electrolyte, a binder, and a conductive material in a solvent. The concentration of the slurry may be appropriately adjusted to facilitate the process of application onto the negative electrode support.
The solvent is not particularly limited to solvents commonly used to fabricate negative electrode slurries. For example, the solvent may be one or more selected from a group consisting of dimethylsulfoxide (DMSO), isopropyl alcohol, N-methylpyrrolidone (NMP), acetone, or xylene, N,N-Dimethylmethanamide (DMF), benzene, tetrahydrofuran (THF), and water.
Furthermore, the application method is not particularly limited as long as the method is capable of applying the negative electrode slurry in the form of a film. For example, the application method may be bar coating, roll coating, spin coating, slit coating, die coating, blade coating, comma coating, slot die coating, lip coating, or solution casting.
Furthermore, the negative electrode support is not particularly limited, provided that it can serve as a support on which the negative electrode slurry is applied. For example, the polyethylene terephthalate (PET) film, polytetrafluoroethylene film, polyethylene film, polypropylene film, polybutene film, polybutadiene film, vinyl chloride copolymer film, polyurethane film, ethylene-vinyl acetate film, ethylene-propylene copolymer film, ethylene-acrylic acid ethyl copolymer film, ethylene-acrylic acid methyl copolymer film, or polyimide film.
In the present invention, in step (2) above, a slurry comprising the positive-electrode active material is applied and dried on the positive electrode collector to form a layer of the positive-electrode active material, so that a positive electrode can be fabricated.
The method for forming and applying the slurry to fabricate the positive electrode may be the same as the method for forming the negative-electrode active material layer in step (1) above.
In the present invention, in step (3) above, a solid electrolyte layer may be disposed between the negative-electrode active material layer and the positive-electrode active material layer to form a laminate.
In the present invention, in step (4), after pressurizing the laminate, the negative electrode support may be removed from the laminate.
The pressurization may be isostatic pressurization or uniaxial pressurization at a pressure of 300 to 800 MPa and a temperature of 20 to 150°C. Specifically, the pressure at pressurization may be 300 MPa or more, 400 MPa or more, or 450 MPa or more, and may be 600 MPa or less, 700 MPa or less, or 800 MPa or less. If the pressure is less than 300 MPa, the interfacial resistance may be excessively increased due to insufficient interfacial contact between the materials in the electrode and the laminate, and if the pressure is greater than 800 MPa, the positive-electrode active material may crack or break, resulting in a decrease in cell performance.

Further, the temperature at pressurization may be from 20 to 150°C. Specifically, the temperature may be 20°C or more, 40°C or more, 60°C or more, 100°C or less, 120°C or less, 140°C or less, or 150°C or less. Temperatures below 20°C may make it difficult to form sufficient interfacial contact between materials in the electrodes and between laminates, and temperatures above 150°C may cause unintended side reactions at the interface of the solid electrolyte and the pre-lithiated negative electrode.

In the present invention, in step (5) above, the negative-electrode active material layer may be pre-lithiated by attaching a surface of the lithium thin film to a surface of the negative-electrode active material layer from which the negative electrode support has been removed.

By attaching the surface of the lithium thin film to the surface of the negative-electrode active material layer, lithium and/or a lithium alloy contained in the lithium thin film may be partially contained in the negative-electrode active material layer, such that the negative-electrode active material layer is pre-lithiated.

In the present invention, in step (6) above, a negative electrode collector may be attached to the other side of the lithium thin film to form a battery.

In the present invention, in step (7) above, the battery may be pressurized to fabricate an all-solid-state battery.

The pressurization of the battery may be accomplished by applying pressure followed by aging.

The pressurization may be isostatic pressurization or uniaxial pressurization at a pressure of 0.5 Mpa to 100 Mpa. Specifically, the pressure at the time of pressurization may be 0.5 Mpa or more, 5 Mpa or more, or 10 Mpa or more, and 20 Mpa or less, 30 Mpa or less, 40 Mpa or less, 50 Mpa or less, 70 Mpa or less, 90 Mpa or less, or 100 Mpa or less. If the pressure is less than 0.5 Map, the uniformity of the fabricated all-solid-state battery may be reduced due to insufficient pre-lithiation, and if the pressure is greater than 100 Mpa, the laminated form of the all-solid-state battery may be deformed due to ductility of the lithium.

Furthermore, the aging may comprise storing at a temperature of 20°C to 100°C. Specifically, the aging temperature may be 20°C or more, 30°C or more, or 40°C or more, and may be 80°C or less, 90°C or less, or 100°C or less. Aging temperatures below 20°C may result in insufficient pre-lithiation, resulting in poor uniformity of the fabricated all-solid-state battery, while temperatures above 100°C may result in unintended side reactions at the interface of the solid electrolyte and the pre-lithiated negative electrode.

## Battery Module

The present invention also provides a battery module including the all-solid-state battery as a unit battery, a battery pack including the battery module, and a device including the battery pack as a power source.

Specific examples of such devices include, but are not limited to, a power tool powered by a battery-powered motor; an electric vehicle, including an electric vehicle (EV), a hybrid electric vehicle (HEV), a plug-in hybrid electric vehicle (PHEV), and the like; electric two-wheeled vehicles, including, but not limited to, electric bicycles (E-bikes) and electric scooters (E-scooters); electric golf carts; and power storage systems. A preferred embodiment of the present invention is described below for the purpose of illustrating the present invention, but it will be apparent to those skilled in the art that various changes and modifications are possible within the scope and technical idea of the present invention, and that such changes and modifications fall within the scope of the appended patent claims.

A preferred embodiment of the present invention is set forth below for the purpose of illustrating the present invention, but it will be apparent to those skilled in the art that various changes and modifications are possible within the scope and technical thought of the present invention, and that such changes and modifications fall within the scope of the appended patent claims.

EXAMPLES

## Example 1

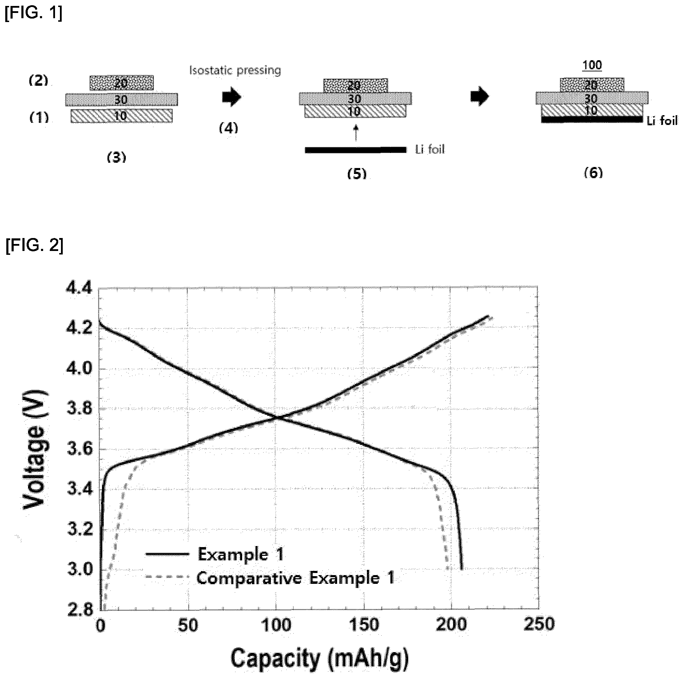

An all-solid-state battery was fabricated according to the process shown in FIG. 1.

(1) Fabrication of a negative electrode 10

A negative-electrode active material was prepared by mixing carbon black, which is an amorphous carbon, and silver (Ag) in a weight ratio of 1:3.

Styrene Butadiene Rubber (SBR) was prepared as a binder.

The negative-electrode active material and the binder were mixed in a weight ratio of 95:5 and added to an NMP (N-Methyl-2-Pyrrolidone) solvent to fabricate a slurry. Furthermore, the negative-electrode active material and the binder were added until the viscosity of the slurry became suitable for film preparation by the blade coater.

The slurry was applied to a polyethylene terephthalate (PET) film, which is a negative electrode support, using a blade coater and dried to form a layer of negative-electrode active material on one side of the negative electrode support.

(2) Fabrication of a positive electrode 20

LiNi$_{0.8}$Co$_{0.15}$Mn$_{0.05}$O$_2$ (NCM) was prepared as the positive-electrode active material, carbon nanofiber (CNF) as the conductive material, and styrene butadiene rubber (SBR) as the binder.

The above positive-electrode active material, conductive material and binder were mixed in a weight ratio of 85 : 5 : 10, and then added to NMP (N-Methy-2-Pyrrolidone) solvent to fabricate a slurry.

The slurry was applied to one side of the positive electrode collector using a blade coater and dried to fabricate a positive electrode having a layer of positive-electrode active material formed on one side of the positive electrode collector. In this case, an Al foil having a thickness of 10 μm was used as the positive electrode collector.

(3) Formation of a laminate

A solid electrolyte layer is disposed between the negative-electrode active material layer and the positive-electrode active material layer to form a laminate. In this case, a Li$_6$PS$_5$Cl solid electrolyte layer 30 was used as the solid electrolyte layer.

(4) Pressurization of the additive and removal of the negative electrode support

After isostatic pressurization of the laminate at 80°C temperature and 500 MPa pressure condition, the negative electrode support was removed.

(5) Pre-lithiation

In the laminate, the negative-electrode active material layer was pre-lithiated by attaching one side of a lithium thin film (Li foil) to one side of the negative-electrode active material layer to which the negative-electrode support abutted.

(6) Fabrication of the battery

An all-solid-state battery 100 was fabricated by attaching a negative electrode collector to the other side of the above lithium thin film. In this case, a stainless steel foil having a thickness of 10 μm was used as the negative electrode collector.

(7) Battery pressurization and aging

The battery fabricated above was uniaxially pressurized to 10 MPa and aged at 60°C for 24 hours.

**Comparative Example 1**

An all-solid-state battery was fabricated in the same manner as in Example 1, except that a non-pre-lithiated negative electrode was used and the battery was not pressurized and aged after fabrication.

**Experimental Example 1: Evaluation of the properties of all-solid-state batteries**

Experiments were conducted to measure the initial discharge of the all-solid-state batteries fabricated in Example 1 and Comparative Example 1, respectively.

For each all-solid-state battery, the experimental results were measured at 0.1C (0.55 mA.cm$^{-2}$) charging and 0.1C (0.55 mA.cm$^{-2}$) discharging conditions.

FIG. 2 is a graph depicting the initial charge/discharge profile of all-solid-state batteries fabricated in Example 1 and Comparative Example 1, respectively.

Referring to FIG. 2, the discharge capacity of Example 1 is 206 mAh/g whereas the discharge capacity of Comparative Example 1 is 198 mAh/g, indicating that Example 1 has an increased discharge capacity compared to Comparative Example 1.

Although the present invention has been described above by means of limited embodiments and drawings, the present invention is not limited thereby, and various modifications and variations can be made by one having ordinary knowledge in the technical field to which the present invention belongs within the equitable scope of the technical idea of the present invention and the patent claims that will be described below.

[Explanation of Reference Numerals]

10: Negative electrode
20: Positive electrode
30: Solid electrolyte layer
100: All-solid-state battery

**Claims**

1. An all-solid-state battery comprising:

a positive electrode,
a negative electrode, and
a solid electrolyte layer,
wherein the positive electrode comprises a positive electrode collector and a positive-electrode active material layer formed on one surface of the positive electrode collector;
wherein the negative electrode comprises a negative electrode collector, a metallic layer formed on one surface of the negative electrode collector, and a negative-electrode active material layer formed on one surface of the metallic layer;

wherein the solid electrolyte layer is disposed between the positive-electrode active material layer and the negative-electrode active material layer; and

wherein the negative-electrode active material layer comprises a negative-electrode active material capable of alloying with lithium or forming a compound with lithium, and lithium.

2. The all-solid-state battery of claim 1, wherein in the negative-electrode active material layer, a concentration of lithium gradually decreases from the surface in contact with the metallic layer to an opposite surface.

3. The all-solid-state battery of claim 1, wherein the lithium included in the negative-electrode active material layer is dispersed in a form of lithium ions or exists in a form combined with the negative-electrode active material.

4. The all-solid-state battery of claim 1, wherein the negative-electrode active material comprises one or more selected from a group consisting of amorphous carbon, gold (Au), platinum (Pt), palladium (Pd), silicon (Si), silver (Ag), aluminum (Al), bismuth (Bi), tin (Sn), and zinc (Zn).

5. The all-solid-state battery of claim 1, wherein a thickness of the negative-electrode active material layer is 5 to 200 $\mu$m.

6. The all-solid-state battery of claim 1, wherein a ratio of an initial charge capacity of the positive-electrode active material layer to an initial charge capacity of the negative-electrode active material layer satisfies the following Equation 1:

## Equation 1

$$0 \leq (b/a) < 0.01$$

wherein a is the initial charge capacity of the positive-electrode active material layer determined from a first open circuit voltage to a maximum charge voltage (vs Li/Li+), and b is the charge capacity of the negative-electrode active material layer determined from a second open circuit voltage to 0.01V (vs Li/Li+).

7. A method for fabricating an all-solid-state battery comprising:

(1) applying and drying a slurry comprising a negative-electrode active material capable of alloying with lithium or forming a compound with lithium on a negative electrode support to form a negative-electrode active material layer;

(2) applying and drying a slurry comprising a positive-electrode active material on a positive electrode collector to form a positive-electrode active material layer, thereby fabricating a positive electrode;

(3) disposing a solid electrolyte layer between the negative-electrode active material layer and the positive-electrode active material layer to form a laminate;

(4) pressurizing the laminate, and then removing the negative electrode support from the laminate;

(5) attaching one surface of a lithium thin film to one surface of the negative-electrode active material layer from which the negative electrode support has been removed, thereby pre-lithiating the negative-electrode active material layer;

(6) attaching a negative electrode collector to an opposing surface of the lithium thin film; and

(7) pressurizing a battery fabricated in the step (6).

8. The method of claim 7, wherein the pressurizing in the step (4) is isostatic pressurizing or uniaxial pressurizing at a pressure of 300 to 800 MPa and a temperature of 20 to 150°C.

9. The method of claim 7, wherein the pressurizing in the step (7) includes aging after applying pressure.

10. The method of claim 9, wherein the pressurizing is isostatic pressurizing or uniaxial pressurizing at a pressure of 0.05 to 100 MPa.

11. The method of claim 9, wherein the aging is conducted at a temperature of 20 to 100°C.

[FIG. 1]

[FIG. 2]

## INTERNATIONAL SEARCH REPORT

| International application No. |
|---|
| **PCT/KR2023/018037** |

### A. CLASSIFICATION OF SUBJECT MATTER

**H01M 10/0585**(2010.01)i; **H01M 4/13**(2010.01)i; **H01M 4/139**(2010.01)i; **H01M 4/04**(2006.01)i; **H01M 10/44**(2006.01)i; **H01M 10/052**(2010.01)i; **H01M 10/0562**(2010.01)i; **H01M 10/42**(2006.01)i

According to International Patent Classification (IPC) or to both national classification and IPC

### B. FIELDS SEARCHED

Minimum documentation searched (classification system followed by classification symbols)

H01M 10/0585(2010.01); H01M 10/052(2010.01); H01M 10/0525(2010.01); H01M 4/131(2010.01); H01M 4/133(2010.01); H01M 4/139(2010.01); H01M 4/1393(2010.01); H01M 4/1395(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 전고체 전지(all-solid battery), 음극(anode), 전리튬화(pre-lithiation), 리튬 금속층 (lithium metal layer)

### C. DOCUMENTS CONSIDERED TO BE RELEVANT

| Category* | Citation of document, with indication, where appropriate, of the relevant passages | Relevant to claim No. |
|---|---|---|
| X | KR 10-2022-0025321 A (LG ENERGY SOLUTION, LTD.) 03 March 2022 (2022-03-03)<br>See paragraphs [0040], [0044], [0059], [0076]-[0077], [0079], [0092], [0096], [0106] and [0113]; and figure 3. | 1-11 |
| A | KR 10-2019-0012973 A (LG CHEM, LTD.) 11 February 2019 (2019-02-11)<br>See entire document. | 1-11 |
| A | KR 10-2022-0148719 A (KOREA INSTITUTE OF ENERGY RESEARCH) 07 November 2022 (2022-11-07)<br>See entire document. | 1-11 |
| A | KR 10-2019-0101807 A (LG CHEM, LTD.) 02 September 2019 (2019-09-02)<br>See entire document. | 1-11 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 February 2024** | **20 February 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/018037**

**C.    DOCUMENTS CONSIDERED TO BE RELEVANT**

| Category* | Citation of document, with indication, where appropriate, of the relevant passages | Relevant to claim No. |
|---|---|---|
| A | US 2021-0066704 A1 (GM GLOBAL TECHNOLOGY OPERATIONS LLC) 04 March 2021 (2021-03-04)<br>See entire document. | 1-11 |

Form PCT/ISA/210 (second sheet) (July 2022)

**INTERNATIONAL SEARCH REPORT**
Information on patent family members

International application No.

**PCT/KR2023/018037**

| Patent document cited in search report | | | Publication date (day/month/year) | Patent family member(s) | | | Publication date (day/month/year) |
|---|---|---|---|---|---|---|---|
| KR | 10-2022-0025321 | A | 03 March 2022 | None | | | |
| KR | 10-2019-0012973 | A | 11 February 2019 | CN | 109792046 | A | 21 May 2019 |
| | | | | EP | 3503266 | A1 | 26 June 2019 |
| | | | | EP | 3503266 | A4 | 23 October 2019 |
| | | | | KR | 10-2283684 | B1 | 02 August 2021 |
| | | | | US | 11658285 | B2 | 23 May 2023 |
| | | | | US | 2019-0237750 | A1 | 01 August 2019 |
| | | | | WO | 2019-027152 | A1 | 07 February 2019 |
| KR | 10-2022-0148719 | A | 07 November 2022 | KR | 10-2022-0148718 | A | 07 November 2022 |
| KR | 10-2019-0101807 | A | 02 September 2019 | CN | 111480251 | A | 31 July 2020 |
| | | | | CN | 111480251 | B | 26 September 2023 |
| | | | | EP | 3712987 | A1 | 23 September 2020 |
| | | | | EP | 3712987 | A4 | 13 January 2021 |
| | | | | KR | 10-2021-0124151 | A | 14 October 2021 |
| | | | | KR | 10-2417200 | B1 | 05 July 2022 |
| | | | | US | 2020-0321612 | A1 | 08 October 2020 |
| | | | | WO | 2019-164319 | A1 | 29 August 2019 |
| US | 2021-0066704 | A1 | 04 March 2021 | CN | 112448047 | A | 05 March 2021 |
| | | | | US | 11527745 | B2 | 13 December 2022 |

Form PCT/ISA/210 (patent family annex) (July 2022)

14

**REFERENCES CITED IN THE DESCRIPTION**

**Patent documents cited in the description**

- KR 2023018037 W
- KR 1020220149206
- KR 1020230154969
- KR 20200134126
- KR 20200129383